# EUROPÄISCHE PATENTSCHRIFT

(11) **EP 1 923 277 B1**
(45) Veröffentlichungstag und Bekanntmachung des Hinweises auf die Patenterteilung: **06.07.2011**
(21) Anmeldenummer: 07020375.7
(22) Anmeldetag: 18.10.2007
(51) Int. Cl.: B60R 21/237

(54) **Luftsackanordnung mit einem Luftsack für ein Luftsackmodul, Verfahren zu dessen Herstellung und zur Faltung eines Luftsackes**
Air bag assembly with an air bag for an air bag module, method for its manufacture and for folding an air bag
Agencement de coussin d'air pour un module de coussin d'air, son procédé de fabrication et son procédé de pliage

(30) Priorität: 18.11.2006 DE 102006054392
(43) Veröffentlichungstag der Anmeldung: 21.05.2008
(73) Patentinhaber: GM Global Technology Operations, Inc., Detroit, MI 48265-3000 (US)
(72) Erfinder: Rick, Ullrich, 55595 Roxheim (DE)
(74) Vertreter: Daniel, Ulrich W.P.

(56) Entgegenhaltungen:
- WO-A-2006/050718
- DE-A1- 10 114 208
- DE-A1- 10 317 378
- DE-A1- 19 716 964
- DE-A1- 19 827 725
- DE-A1- 19 845 721
- DE-U1-202005 011 878

## Beschreibung

Die vorliegende Erfindung betrifft eine Luftsackanordnung mit einem Luftsack für ein Luftsackmodul nach dem Oberbegriff des Anspruchs 1 sowie ein Verfahren zur Herstellung einer Luftsackanordnung nach den Oberbegriff des Anspruchs 10.

Ein Luftsackmodul umfasst allgemein ein Gehäuse, in dem ein aufblasbarer Luftsack in gefaltetem Zustand aufgenommen ist. Durch einen Gasgenerator kann der Luftsack bei einem Unfall explosionsartig entfaltet werden und so Passagiere eines Kraftfahrzeuges schützen. Hierzu ist das Gehäuse mit dem gefalteten Luftsack beispielsweise in einem Lenkrad (Fahrer-Luftsack), einer Armaturentafel (Beifahrer-Luftsack) oder an einer seitlichen Fahrzeugkarosserie, beispielsweise einer A-, B- oder C-Säule oder dem Fahrzeugdach befestigt.

Um die Passagiere wirkungsvoll zu schützen, insbesondere bei so genannten Out-of-Position-Unfällen, bei denen die Fahrzeuginsassen sich beispielsweise aufgrund ihrer Körpergröße nicht in einer Normalposition befinden, soll der aufgeblasene Luftsack ein möglichst großes Volumen aufweisen, um so einen großen Prallbereich abzudecken und eine ausreichende Energieaufnahme zu gewährleisten.

Gleichzeitig soll der Luftsack bei Nichtgebrauch möglichst klein sein, um wenig Bauraum im Fahrzeug zu beanspruchen. Hierzu wird der Luftsack herkömmlicherweise mittels Metallschwertern gefaltet und in das Gehäuse eingepresst.

Sowohl bei der Faltung als auch beim anschließenden Einführen in das Gehäuse kann es zu Beschädigungen des Luftsackes kommen, die dessen ordnungsgemäße Funktion beeinträchtigen können. Insbesondere, da solche unter Umständen mikroskopische Beschädigungen nicht ohne großen Aufwand erkannt bzw. überprüft werden können, können sie die Unfallsicherheit des Fahrzeugs verringern.

Aus der DE 199 41 103 A1 ist ein Verfahren zum Falten eines Luftsackes bekannt, bei dem der Luftsack in einem Randbereich vorgefaltet, anschließend teilweise aufgeblasen und in diesem Zustand durch Schiebeorgane mechanisch in eine Zwischenform gebracht wird. Anschließend wird die Luft im Luftsack durch Anlegen eines Unterdruckes mittels einer Pumpe evakuiert und so in seiner Zwischenform fixiert. Danach wird der Luftsack durch Schiebeorgane in eine zweite Zwischenform gebracht und wiederum durch Evakuieren in dieser fixiert, bevor er abschließend ohne weitere Evakuierung durch ein Stempelorgan mechanisch in seine endgültige zur Aufnahme in dem Gehäuse bestimmte Form gebracht wird.

Auch bei diesem Verfahren besteht die Gefahr, den Luftsack bei den mechanischen Faltvorgängen oder dem anschließenden Einführen in das Gehäuse des Luftsackmoduls, gegebenenfalls unbemerkt, zu beschädigen.

Aus der DE 101 14 208 A1, die dem Oberbegriff des Anspruchs 1 entspricht, und der DE 10 2004 056 128 A1 sowie der hierauf Bezug nehmenden DE 20 2005 011 878 U1 und WO WO 2006/050718 A1 ist es bekannt, einen Luftsack mittels einer Faltvorrichtung zu falten, anschließend mit einer Folie zu umhüllen und diese durch Unterdruck an den gefalteten Luftsack anzulegen.

Aus der DE 103 17 378 A1, die den Oberbegriff des Anspruchs 10 entspricht, und der DE 197 16 964 A1 ist es bekannt, einen Luftsack mittels Unterdruck zu falten, ohne ihn mit einer Folie zu umhüllen.

Aufgabe der vorliegenden Erfindung ist es daher, die Gefahr einer Beschädigung des Luftsackes zu verringern.

Diese Aufgabe wird durch die Merkmale des Patentanspruchs 1 bzw. 10 gelöst. Vorteilhafte Ausführungsformen der Erfindung sind Gegenstand der Unteransprüche.

Eine Luftsackanordnung nach einem Aspekt der vorliegenden Erfindung umfasst einen Luftsack für ein Luftsackmodul mit einem Gasgenerator zum Befüllen des Luftsackes und einem Gehäuse zur Aufnahme der Luftsackanordnung mit dem gefalteten Luftsack. Das Gehäuse kann integral mit einem Teil einer Innenverkleidung eines Kraftfahrzeuges, beispielsweise einem Lenkradpralltopf, einer Armaturentafel, einem Dachhimmel, einer Türverkleidung oder der Verkleidung einer A-, B- oder C-Säule ausgebildet sein. Eine solche Integralbauweise kann das Gewicht und den Bauraum des Luftsackmoduls reduzieren. Gleichermaßen kann das Gehäuse separat ausgebildet und an bzw. hinter einer solchen Verkleidung befestigt sein, was es ermöglicht, das Luftsackmodul separat zu fertigen und vorzumontieren und so die Herstellungs- und Montagekosten zu senken.

Erfindungsgemäß umhüllt eine Folie den gefalteten Luftsack wenigstens teilweise, in einer bevorzugten Ausführung vollständig. Durch diese Folie wird der gefaltete Luftsack beim Einbringen in das Gehäuse vor Beschädigungen während der Montage geschützt. Insbesondere verfangen sich Falten des umhüllten gefalteten Luftsackes nicht mehr so leicht an Rändern oder anderen Kanten des Gehäuses. Zudem schützt die Folie bei einem reibschlüssigen Einbringen in das Gehäuse den Luftsack vorteilhaft vor Abrieb. Weiterhin können aus einer Beschädigung der Folie auf eine Beschädigung des von dieser umhüllten Luftsackes geschlossen und so beschädigte Luftsäcke erkannt und aussortiert werden.

Zusätzlich wirkt die Folie einem Luftsackaufspringen, i. e. einem ungewollten wenigstens teilweisen Entfalten des gefalteten Luftsackes aufgrund der beim Falten induzierten elastischen Spannungen entgegen und erleichtert so die Montage im Gehäuse.

Gemäß einem Verfahren nach einem anderen Aspekt der vorliegenden Erfindung wird der Luftsack mittels Unterdruck in seine endgültige, zur Aufnahme in das Gehäuse bestimmte Form gefaltet. Im Gegensatz zu dem aus der DE 199 41 103 A1 bekannten Verfahren wird dabei der Luftsack beim Faltvorgang nicht durch mechanische Schiebeorgane gefaltet und durch den Unterdruck lediglich in der durch diese mechanischen Beaufschlagungen erzwungenen Zwischenstellungen fixiert, bevor er abschließend durch einen Presstempel mechanisch in seine endgültige Form gebracht wird, sondern durch den Unterdruck selber gefaltet und in seine endgültige Form gebracht. Durch den Wegfall der mechanischen Beaufschlagung durch Schiebeorgane, Presstempel, Metallschwerter oder dergleichen kann der Faltvorgang sanfter ausgeführt werden. Zudem kann das Falten mittels Unterdruck es dem Luftsack ermöglichen, sich entsprechend seiner Steifigkeitsverteilung zu falten und so eine homogene und damit niedrigere Spannungsverteilung erzielen als die von außen mechanisch aufgezwungene Faltung nach dem Stand der Technik.

Die Umhüllung des Luftsackes und dessen Faltung mittels Unterdruck können unabhängig voneinander die Gefahr einer Beschädigung des Luftsackes reduzieren. Besonders vorteilhaft werden beide Maßnahmen jedoch miteinander kombiniert. Daher wird nachfolgend die vorliegende Erfindung mit Bezug auf eine Luftsackanordnung näher erläutert, bei der der Luftsack mittels Unterdruck gefaltet und von einer Folie umhüllt ist, ohne hierdurch die Erfindung auf eine solche Kombination zu beschränken.

Nach einer bevorzugten Ausführung erfolgt zunächst die Faltung des Luftsackes, indem dessen Innenvolumen, welches bei einem Unfall durch den Gasgenerator befüllt wird, durch eine Pumpe wenigstens teilweise evakuiert wird. Alternativ oder zusätzlich kann der Luftsack in eine Evakuierkammer eingebracht werden, in der ein gegenüber dem Umgebungsdruck höherer Druck herrscht. In beiden Fällen faltet sich der Luftsack unter dem Druck der ihn auf seiner Außenseite umgebenden Luft zusammen und verringert so sein Packvolumen. Gegenüber herkömmlichen mechanischen Faltungen kann das Packvolumen so vorteilhaft um 25 - 30 % reduziert werden. Anschließend wird das Innenvolumen des evakuierten Luftsackes luftdicht abgeschlossen, indem der Luftsack beispielsweise mit dem Gasgenerator, einem abgesperrten Füllrohr zur späteren Verbindung mit dem Gasgenerator oder einem Verschluss abgedichtet wird. Die beim Evakuieren eingenommene Form des Luftsackes ist somit unter Vernachlässigung von dessen Elastizität endgültig fixiert.

Anschließend wird der so gefaltete Luftsack mit der Folie umhüllt. Dies kann in der Art einer Vakuumverpackung geschehen, bei der der Luftsack mit der Folie umhüllt und diese anschließend ebenfalls wenigstens teilweise evakuiert wird, so dass sie sich eng an den Luftsack anschmiegt. Eine enge Umhüllung kann auch durch andere bekannte Verfahren erzielt werden. So kann die Folie vor dem Umhüllen elastisch gedehnt werden und sich unter teilweiser Rückdeformation an den gefalteten Luftsack anlegen. Sie kann auch, beispielsweise unter Wärmeeinwirkung, auf den Luftsack aufgeschrumpft werden. Eine enge Umhüllung des Luftsackes durch die Folie wirkt einem Luftsackaufspringen verstärkt entgegen und kann insbesondere zu einer faltenarmen oder faltenfreien Oberfläche der Luftsackanordnung führen, die bei der Montage in das Gehäuse vorteilhaft ist.

Der Luftsack kann auch schon während seines Evakuierens mit der Folie umhüllt sein, wobei diese vorteilhaft dessen Faltung wenigstens teilweise folgt oder sich während der Faltung zusammenzieht. Ist die Folie dabei luftundurchlässig ausgebildet, wird es vorteilhaft möglich, auch teilweise luftdurchlässige Luftsäcke zu evakuieren, ohne dass Luft aus der Umgebung nachströmt. Solche teilweise luftdurchlässigen Luftsäcke können aufgrund der Durchtrittsträgheit des sie expandierendes Gases aus dem Gasgenerator und der Molekülgröße dieses Gases grundsätzlich ebenfalls in Luftsackmodulen Verwendung finden, da sie ihre durch das Gas bedingte Form nur für eine sehr kurze Zeit aufrecht erhalten müssen, wobei ein anschließendes Erschlaffen des Luftsackes zur Bergung der Passagiere ohnehin vorteilhaft ist.

Ist die Folie wenigstens teilweise luftundurchlässig, kann der Luftsack auch dadurch gefaltet werden, dass ausschließlich die ihn umhüllende Folie wenigstens teilweise evakuiert wird. Wie vorstehend mit Bezug auf die Evakuierung des Luftsackes selber beschrieben, zieht sich die Folie dabei unter dem Druck der sie umgebenden Luft zusammen und faltet dabei den von ihr umhüllten Luftsack mit.

Die durch die Evakuierung des Luftsackes und/oder einer ihn umhüllenden Folie eingenommene endgültige Form der Luftsackanordnung bzw. des Luftsackes kann beispielsweise durch eine Evakuierkammer, die Anordnung von Sauganschlüssen der Pumpe im Innenvolumen des Luftsackes bzw. der Folie, den bei der Evakuierung erzeugten Unterdruck, die Evakuierungszeit und/oder den Druckverlauf während der Evakuierung vorgegeben werden. In einer bevorzugten Ausführung ist die Evakuierkammer der endgültigen, zur Aufnahme in das Gehäuse bestimmten Form der Luftsackanordnung bzw. des Luftsackes derart angepasst, dass sich eine zur Aufnahme in das Gehäuse optimale Form ergibt.

Vorteilhafterweise kann die Folie auch den Gasgenerator des Luftsackmoduls oder ein Füllrohr zur Verbindung des Innenvolumens des Luftsackes mit dem Gasgenerator wenigstens teilweise umhüllen. Hierdurch wird es möglich, Luftsackanordnung und Gasgenerator bzw. Füllrohr als Baueinheit komplett vorzufertigen, wobei die Anbindung der Folie an den Gasgenerator bzw. das Füllrohr einem Luftsackaufspringen entgegenwirkt und den Einbau in das Gehäuse des Luftsackmoduls erleichtert. Insbesondere können so Beschädigungen des Luftsackes bei der Verbindung mit dem Füllrohr bzw. dem Gasgenerator vermieden werden.

Wird der Luftsack mittels Unterdruck in seine endgültige Form gebracht, ist es ebenfalls vorteilhaft, ihn bereits während dieses Formgebungsprozesses mit dem Gasgenerator zu verbinden. Dies ermöglicht es dem Luftsack bzw. der Luftsackanordnung, eine an den Gasgenerator angepasste Form einzunehmen. Ist beispielsweise der Gasgenerator im Innenvolumen des Luftsackes angeordnet, so legt sich dieser bei der Beaufschlagung mit einem höheren Außendruck an die Außenfläche des Gasgenerators an und nimmt so ein kleinstmögliches Packvolumen ein.

Die Folie ist, insbesondere hinsichtlich ihrer Reißfestigkeit und ihrer Elastizität vorteilhafterweise so dimensioniert, dass sie einerseits den Luftsack bei der Montage ausreichend schützt, andererseits dessen Entfaltung bei einem Unfall des Kraftfahrzeuges nicht oder nur wenig beeinträchtigt. Hierzu kann das Material, die Wandstärke und die Form der Folie entsprechend gewählt werden. Zusätzlich kann die Folie Sollbruchstellen, insbesondere Stellen mit einer linien- oder flächenförmigen Materialverdünnung aufweisen. Weiter kann die Folie auch Verstärkungen, beispielsweise Metall- und/oder Kunststoffstreifen aufweisen, um ihre Form vorzugeben. Eine solche Folie kann vorteilhaft auch die Entfaltung des Luftsackes lenken, so dass eine gewünschte Entfaltungscharakteristik vorgegeben werden kann.

Die Folie besteht bevorzugt aus Kunststoff und/oder Metall. Eine Kunststofffolie kann beispielsweise als Schrumpf-Folie den Luftsack besonders eng umhüllen, indem sie unter Wärmeeinwirkung zunächst ein größeres Innenvolumen aufweist, in diesem Zustand den Luftsack umhüllt und anschließend auf ein geringeres Innenvolumen zusammenschrumpft. Zudem kann eine Kunststofffolie kostengünstig hergestellt werden, wobei ihre Eigenschaften wie Reißfestigkeit, Elastizität und dergleichen durch die Wahl eines entsprechenden Kunststoffes in weiten Bereichen vorgegeben werden können. Eine Metallfolie kann sehr dünn hergestellt werden und weist im Gegensatz zu Kunststofffolien den Vorteil auf, keine Kriech- oder Relaxaktionscharakteristik zu zeigen. D.h., eine Metallfolie dehnt sich unter dem Druck des umhüllten Luftsackes, der sich aufgrund der durch seine Faltung induzierten elastischen Spannungen auszudehnen sucht, auch über längere Zeiträume nicht, was ein problemloses längeres Lagern der Luftsackanordnung in ihrer endgültigen Form gestattet. Zudem kann eine Metallfolie den Luftsack gegenüber Temperaturschwankungen seiner Umgebung schützen und so seine Lebensdauer erhöhen. Bevorzugt können die Vorteile von Metall- und Kunststofffolien auch kombiniert werden, indem eine metallbeschichtete, insbesondere metallbedampfte Kunststofffolie eingesetzt wird.

Die Folie kann wasserdicht, luftdicht und/oder gasdicht ausgebildet sein. Hierdurch kann der Luftsack vorteilhafterweise gegenüber den Umgebungsbedingungen isoliert, bevorzugt hermetisch abgeschlossen sein. Eine wasserdichte Folie verhindert beispielsweise das Eindringen von Feuchtigkeit in den Luftsack während der Lagerung sowie im eingebauten Zustand. Eine luftdichte Folie verhindert das Eindringen von Luft und den Eintrag der in ihr gespeicherten Feuchtigkeit. Eine gasdichte Folie kann den Luftsack vor Gasen schützen, die sein Material schädigen.

Die Folie kann den Luftsack auch vor anderen Umwelteinflüssen, beispielsweise Wärme oder Lichteinstrahlung, insbesondere UV-Bestrahlung schützen. So verhindert beispielsweise eine lichtundurchlässige Folie, dass der Luftsack während seiner Lagerung bis zum Einbau von UV-Licht beschienen wird, und wirkt so einer Alterung des Luftsackmaterials entgegen.

Bevorzugt weist die Folie auf wenigstens einer Oberflächenseite einen niedrigen Reibwert auf. Hierzu kann die Folie aus einem Material hergestellt oder mit einem Material beschichtet sein, das vorteilhafterweise einen Reibungskoeffizienten im Bereich von 0,005 bis 0, 3, bevorzugt von 0,01 bis 0,2 und besonders bevorzugt von 0,02 bis 0,1 aufweist. Als Beschichtungsmaterial kommt beispielsweise Teflon in Betracht. Ein niedriger Reibwert auf der dem Luftsack zugewandten Oberfläche der Folie verringert die Reibung zwischen Folie und Luftsack und schützt so den Luftsack vor Beschädigungen bei Verformungen der Folie, beispielsweise beim Einbau in das Gehäuse. Ein niedriger Reibwert auf der gegenüberliegenden, dem Luftsack abgewandten Oberfläche der Folie verringert die Reibung zwischen Folie und Gehäuse beim Einbau der Luftsackanordnung, vermindert so die auftretenden Kräfte und schützt dadurch gleichermaßen Folie und Luftsack beim Einbau.

Die Folie kann einteilig oder mehrteilig ausgebildet sein. Eine einteilige Ausgestaltung erleichtert eine gas-, luft- bzw. wasserdichte Ausbildung der Folie, da keine Nahtstellen zwischen Folienteilen abgedichtet werden müssen. Eine mehrteilige Ausführung erhöhte die Flexibilität bei der Gestaltung der Folie. Insbesondere können vorgeformte Folienteile derart miteinander verbunden werden, dass die Folie in eine Form mit Rundungen und/oder Kanten vorgeformt ist. So kann die Folie beispielsweise aus den ebenen Abwicklungen von Oberflächenbereichen einer dreidimensionalen Form, etwa einer Kugel, zusammengesetzt werden, was es ermöglicht, eine solche dreidimensionale Form faltenfrei aus einer ebenen Grundfolie herzustellen. Eine mehrteilige Ausführung erleichtert es auch, in der Folie Bereiche unterschiedlicher Materialstärken auszubilden. Hierdurch kann, wie vorstehend beschrieben, eine Entfaltungscharakteristik des Luftsackes, aber auch eine Faltungscharakteristik der Folie vorgegeben werden.

Die Einzelteile einer mehrteilig ausgebildeten Folie können miteinander heiß oder kalt verklebt, verschweißt, vercrimpt, verpresst, verstanzt und/oder verprägt sein. Ein- und mehrteilige Folien können mit dem Gasgenerator, einem Füllrohr, dem Luftsack und/oder einem Träger heiß oder kalt verklebt, verschweißt, vercrimpt, verpresst, verstanzt und/oder verprägt sein. Dies ermöglicht auf vorteilhafte, insbesondere rasche, zuverlässige und kostengünstige Weise eine hermetische Abdichtung der Folie und damit des von ihr umhüllten Luftsackes.

Ein von einer Folie umhüllter und/oder mittels Unterdruck in seine endgültige Form gefalteter Luftsack kann als Baueinheit separat gefertigt und bis zum Einbau gelagert werden. Gleichermaßen kann der Luftsack auch direkt im Gehäuse des Luftsackmoduls evakuiert werden, so dass der Montageschritt des Einbringens des fertig gefalteten Luftsackes in das Gehäuse vorteilhaft entfallen kann. Bei einer solchen Faltung nimmt der Luftsack automatisch eine zur Aufnahme in dem Gehäuse geeignete Form ein, das Gehäuse kann vorteilhaft als Evakuierungskammer dienen.

Weitere vorteilhafte Weiterbildungen der vorliegenden Erfindung ergeben sich aus den Unteransprüchen und der nachfolgenden Beschreibung bevorzugter Ausführungen. Hierzu zeigt teilweise schematisiert:
- Fig. 1a: einen Luftsack einer Luftsackanordnung nach einer Ausführung der vorliegenden Erfindung während eines ersten Faltens mittels Unterdruck;
- Fig. 1b: einen Luftsack einer Luftsackanordnung nach einer Ausführung der vorliegenden Erfindung während eines zweiten Faltens mittels Unterdruck;
- Fig. 2: den gefalteten Luftsack aus Fig. 1a bzw. 1b;
- Fig. 3: den mit einer Folie umhüllten Luftsack aus Fig. 2;
- Fig. 4a,: und
- Fig. 4b: eine Einzelheit A aus Fig. 3; und
- Fig. 5: die in einem Gehäuse eines Luftsackmoduls angeordnete Luftsackanordnung.

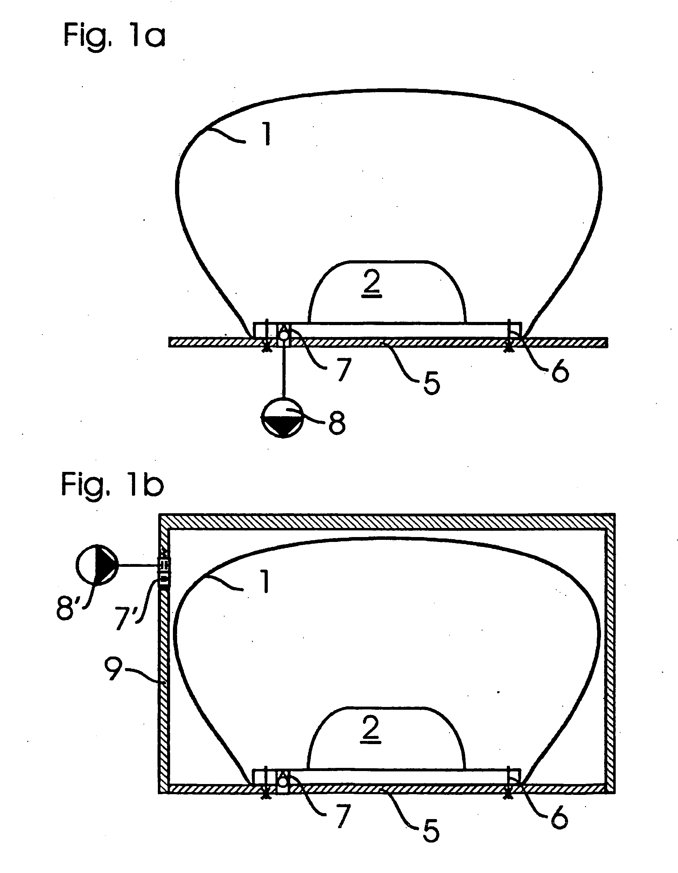

Fig. 1a zeigt einen Gasgenerator 2, der mittels Schrauben 6 auf einem Träger 5 befestigt ist. Zwischen dem Gasgenerator 2 und dem Träger 5 ist der Rand eines ansonsten geschlossenen Luftsackes 1 klemmend gehalten, so dass ein Gas , welches aus dem Gasgenerator 2 in das diesem zugewandte Innenvolumen des Luftsackes 1 austritt, den Luftsack in eine vorgegebene Form aufblasen kann, in der der Luftsack bei einem Unfall einen Passagier schützt. Die Befestigung des Luftsackes 1 am Gasgenerator 2 ist rein exemplarisch und kann auf andere Weise, beispielsweise durch Verkleben erfolgen. In einer nicht dargestellten Modifikation ist der Gasgenerator in einem vollständig geschlossenen Luftsack aufgenommen. An Stelle des Gasgenerators kann auch ein Ende eines Füllrohres vorgesehen sein, welches das Innenvolumen des Luftsackes 1 mit einem an einer anderen Stelle angeordneten Gasgenerator, bevorzugt luftdicht, verbindet.

In dem Gasgenerator 2 bzw. dem Träger 5 ist ein Rückschlagventil 7 angeordnet, welches mit dem dem Gasgenerator 2 zugewandten Innenvolumen des Luftsackes 1 kommuniziert. Das Rückschlagventil 7 gestattet ein Ausströmen von Luft aus dem Innenvolumen des Luftsackes 1 und verhindert ein Einströmen von Luft in dieses Innenvolumen.

Mit dem Rückschlagventil 7 ist die Saugseite einer Pumpe 8 verbunden. Sofern die Pumpe 8 selber ein Rückströmen von Luft zu ihrer Saugseite verhindert, kann das Ventil 7 durch einen einfachen Anschluss ersetzt sein.

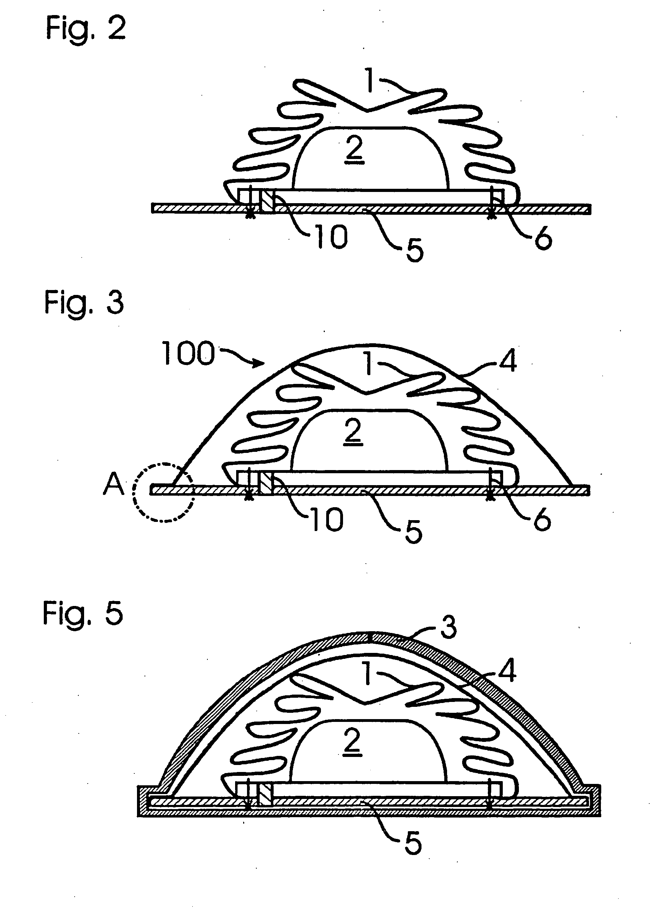

Bei dem in Fig. 1a dargestellten ersten Falten des Luftsackes 1 wird die Pumpe 8 betrieben und saugt dabei Luft aus dem Innenvolumen des Luftsackes 1 durch das Ventil 7. Dadurch entsteht im Inneren des Luftsackes 1 ein Unterdruck gegenüber der Umgebung. Der umgebende Außendruck presst daher den Luftsack 1 in die in Fig. 2 gezeigte Form zusammen. Dabei legt sich der Luftsack 1 an die Außenkontur des Gasgenerators 2 an. Durch diese Außenkontur, die Platzierung des Rückschlagventils 7 und/oder die Steuerung des zeitlichen Verlaufes und der Förderleistung der Pumpe 8 kann die Form, in die sich der Luftsack 1 zusammenfaltet, beeinflusst werden. Im Ausführungsbeispiel ergibt sich eine im Wesentlichen kegelförmige Außenkontur des Luftsackes, wobei die überschüssige Oberfläche zu in Fig. 2 angedeuteten Faltungen des Luftsackes 1 führt.

In Fig. 1b ist ein zweites Falten des Luftsackes 1 mittels einer Evakuierkammer 9 dargestellt, wobei mit der Ausführung nach Fig. 1a identische Elemente mit denselben Bezugszeichen bezeichnet sind. Dieses zweite Falten kann alternativ zu oder gemeinsam mit dem in Fig. 1a dargestellten ersten Falten durchgeführt werden.

Beim zweiten Falten schließt der Träger 5 luftdicht eine Evakuierkammer 9 ab, so dass der Luftsack 1 und der Gasgenerator 2 im Inneren der Evakuierkammer 9 angeordnet sind. Mit dem Inneren der Evakuierkammer 9 ist die Druckseite einer Pumpe 8' über ein Schaltventil 7' verbunden. Sofern die Pumpe 8' selber ein Rückströmen von Luft in ihre Druckseite verhindern kann, kann das Ventil 7' durch einen einfachen Anschluss ersetzt sein.

Zum Falten des Luftsackes 1 wird die Pumpe 8' betrieben und presst dabei durch das Ventil 7' Luft in das Innere der Evakuierkammer 9. Dadurch entsteht im Inneren der Evakuierkammer 9 ein Überdruck gegenüber dem Innenvolumen des Luftsackes 1, in dem folglich ein Unterdruck gegenüber seiner Umgebung herrscht. Der umgebende Außendruck presst somit Luft aus dem Innenvolumen des Luftsackes 1 durch das Rückschlagventil 7. Dabei wird der Luftsack 1 in die in Fig. 2 gezeigte Form zusammengefaltet und legt sich an die Außenkontur des Gasgenerators 2 an. Durch diese Außenkontur, die Platzierung des Ventils 7' und/oder die Steuerung des zeitlichen Verlaufes und der Förderleistung der Pumpe 8' kann die Form, in die sich der Luftsack 1 zusammenfaltet, beeinflusst werden.

Nach der Faltung des Luftsackes 1 mittels Unterdruck durch die erste und/oder zweite Faltung wird das Ventil 7 durch einen Verschlussstopfen 10 ersetzt und so der Innenraum des Luftsackes 1 luftdicht abgeschlossen.

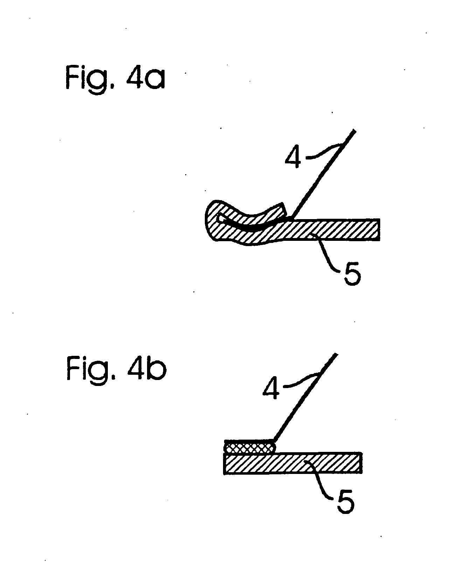

Ausgehend von dem in Fig. 2 gezeigten Zustand wird der zusammengefaltete Luftsack 1 mit einer Kunststofffolie 4 vollständig umhüllt (Fig. 3). Diese wird an dem Träger 5 durch Vercrimpen oder Verprägen (Fig. 4a) und/oder Verkleben (Fig. 4b) befestigt, wobei die Folie 4 eng an dem gefalteten Luftsack 1 anliegt. Die Folie 4 ist in einem leicht gespannten Zustand am Träger 5 befestigt, so dass ihre vom Luftsack 1 abgewandte Oberfläche im Wesentlichen glatt ist und keine Falten aufweist. Diese Oberfläche ist zusätzlich mit Metall bedampft (nicht dargestellt), was den von ihr umhüllten Luftsack 1 vorteilhaft gegen UV-Strahlung abschirmt, die zu einer Alterung des Luftsackmaterials führen würde.

Die metallische Oberfläche der Folie weist einen geringen Reibungskoeffizienten auf. Zusammen mit der glatten und faltenfreien Kontur der den Luftsack 1 und die Folie 4 umfassenden Luftsackanordnung 100 erleichtert dies das Einführen der Luftsackanordnung 100 in ein Gehäuse 3 eines Luftsackmoduls. Insbesondere können keine Falten des Luftsackes 1 an Rändern des Gehäuses 3 hängen bleiben und zu einer Beschädigung des Luftsackes 1 führen. Zudem verringern sich aufgrund des niedrigen Reibungskoeffizienten der Folie 4 die beim Einbringen der Luftsackanordnung 100 in das Gehäuse 3 auftretenden Kräfte. Schließlich schützt die Folie 4 den Luftsack 1 während einer Lagerung vor dem Einbau, aber auch im in das Gehäuse 3 eingebauten Zustand vor Feuchtigkeit, Wärmeeinwirkung und anderen Umwelteinflüssen, die zu einer vorzeitigen Alterung des Luftsackmaterials führen würden.

Wie aus Fig. 5, welche den zusammengebauten Zustand des Luftsackmoduls zeigt, erkennbar ist, weist das Gehäuse 3 eine im Wesentlichen kegelförmige Aussparung auf, in der die Luftsackanordnung 100 Platz sparend aufgenommen ist. Durch die Faltung des Luftsackes 1 in die in Fig. 2 dargestellte kegelförmige Form sowie die Umhüllung mit der Folie 4 ist die Außenkontur der Luftsackanordnung 100 dem Gehäuse optimal angepasst.

Bei einem Unfall erzeugt der Gasgenerator 2 explosionsartig ein sich rasch ausdehnendes Gas, welches den Luftsack 1 entfaltet (nicht dargestellt). Dabei zerreißt der Luftsack 1 die ihn umhüllende und zu diesem Zweck nur wenig reißfeste Kunststofffolie 4, öffnet an einer Sollbruchstelle das Gehäuse 3 und entfaltet sich in eine einen Passagier schützende Form.

### Bezugszeichenliste

| | |
|---|---|
| 1 | Luftsack |
| 2 | Gasgenerator |
| 3 | Gehäuse |
| 4 | Folie |
| 5 | Träger |
| 6 | Schraube |
| 7, 7' | Ventil |
| 8, 8' | Pumpe |
| 9 | Evakuierkammer |
| 10 | Verschlussstopfen |
| 100 | Luftsackanordnung |

## Patentansprüche

1. Luftsackanordnung (100) mit einem Luftsack (1) für ein Luftsackmodul mit einem Gasgenerator (2) zum Befüllen des Luftsackes (1) und einem Gehäuse (3) zur Aufnahme der Luftsackanordnung (100) mit dem gefalteten Luftsack (1), wobei die Luftsackanordnung (100) eine Folie (4) umfasst, die den gefalteten Luftsack (1) wenigstens teilweise umhüllt, **dadurch gekennzeichnet, dass** die Folie (4) auf wenigstens einer Oberflächenseite einen Reibungskoeffizienten im Bereich von 0,005 bis 0,3 aufweist.

2. Luftsackanordnung nach Anspruch 1, **dadurch gekennzeichnet, dass** der Luftsack (1) mittels Unterdruck gefaltet ist.

3. Luftsackanordnung nach einem der vorhergehenden Ansprüche, **dadurch gekennzeichnet, dass** die Folie (4) den Luftsack (1) eng anliegend umhüllt.

4. Luftsackanordnung nach einem der vorhergehenden Ansprüche, **dadurch gekennzeichnet, dass** die Folie (4) auch den Gasgenerator (2) des Luftsackmoduls wenigstens teilweise umhüllt.

5. Luftsackanordnung nach einem der vorhergehenden Ansprüche, **dadurch gekennzeichnet, dass** die Folie (4) Kunststoff und/oder Metall enthält.

6. Luftsackanordnung nach einem der vorhergehenden Ansprüche, **dadurch gekennzeichnet, dass** die Folie (4) wasserdicht, luftdicht und/oder gasdicht ist.

7. Luftsackanordnung nach einem der vorhergehenden Ansprüche, **dadurch gekennzeichnet, dass** die Folie (4) einteilig oder mehrteilig ausgebildet ist.

8. Luftsackanordnung nach einem der vorhergehenden Ansprüche, **dadurch gekennzeichnet, dass** die Folie (4) verklebt, verschweißt, vercrimpt, verpresst, verstanzt und/oder verprägt ist.

9. Luftsackmodul mit einer Luftsackanordnung (100) nach einem der vorhergehenden Ansprüche, einem Gasgenerator (2) zum Befüllen des Luftsackes (1) der Luftsackanordnung (100) und einem Gehäuse (3) zur Aufnahme der Luftsackanordnung (100) mit dem gefalteten Luftsack (1).

10. Verfahren zur Herstellung einer Luftsackanordnung (100) mit einem Luftsack (1) für ein Luftsackmodul mit einem Gasgenerator (2) zum Befüllen des Luftsackes (1) und einem Gehäuse (3) zur Aufnahme der Luftsackanordnung (100) mit dem gefalteten Luftsack (1), wobei der Luftsack (1) mittels Unterdruck in seine endgültige, zur Aufnahme in das Gehäse (3) bestimmte Form gefaltet wird, **dadurch gekennzeichnet, dass** der Luftsack (1) währenddessen mit einen Folie (4) umhüllt wird.

## Claims

1. An airbag arrangement (100), comprising an airbag (1) for an airbag module with a gas generator (2) for filling the airbag (1) and a housing (3) for accommodating the airbag arrangement (100) with the folded airbag (1), with the airbag arrangement (100) comprising a foil (4) which encloses the folded airbag (1) at least in part, **characterized in that** the foil (4) has a coefficient of friction in the range of 0.005 to 0.3 on at least one surface side.

2. An airbag arrangement according to claim 1, **characterized in that** the airbag (1) is folded by means of negative pressure.

3. An airbag arrangement according to one of the preceding claims, **characterized in that** the foil (4) encloses the airbag (1) by close fit.

4. An airbag arrangement according to one of the preceding claims, **characterized in that** the foil (4) also encloses the gas generator (2) of the airbag module at least in part.

5. An airbag arrangement according to one of the preceding claims, **characterized in that** the foil (4) contains plastic and/or metal.

6. An airbag arrangement according to one of the preceding claims, **characterized in that** the foil (4) is water-tight, air-tight and/or gas-tight.

7. An airbag arrangement according to one of the preceding claims, **characterized in that** the foil (4) is arranged integrally or in several parts.

8. An airbag arrangement according to one of the preceding claims, **characterized in that** the foil (4) is glued, welded, crimped, pressed, punched and/or embossed.

9. An airbag module, comprising an airbag arrangement (100) according to one of the preceding claims, a gas generator (2) for filling the airbag (1) of the airbag arrangement (100) and a housing (3) for accommodating the airbag arrangement (100) with the folded airbag (1).

10. A method for producing an airbag arrangement (100),
comprising an airbag (1) for an airbag module with a gas generator (2) for filling the airbag (1) and a housing (3) for accommodating the airbag arrangement (100) with the folded airbag (1), with the airbag (1) being folded by means of negative pressure into its final shape determined for accommodating in the housing (3), **characterized in that** the airbag (1) is enclosed at the same time by a foil (4).

## Revendications

1. Disposition de sac gonflable (100) avec un sac gonflable (1) pour un module de sac gonflable avec un générateur de gaz (2) pour remplir le sac gonflable (1) et avec un boîtier (3) pour recevoir la disposition de sac gonflable (100) avec le sac gonflable (1) plié, dans lequel la disposition de sac gonflable (100) comprend un film (4) qui enveloppe au moins partiellement le sac gonflable (1) plié, **caractérisée en ce que** le film (4) présente sur au moins une face de sa surface un coefficient de friction compris entre 0,005 et 0,3.

2. Disposition de sac gonflable selon la revendication 1, **caractérisée en ce que** le sac gonflable (1) est plié au moyen d'une dépression.

3. Disposition de sac gonflable selon l'une des revendications précédentes, **caractérisée en ce que** le film (4) enveloppe le sac gonflable (1) en se plaquant étroitement.

4. Disposition de sac gonflable selon l'une des revendications précédentes, **caractérisée en ce que** le film (4) enveloppe aussi au moins partiellement le générateur de gaz (2) du module de sac gonflable.

5. Disposition de sac gonflable selon l'une des revendications précédentes, **caractérisée en ce que** le film (4) contient du plastique et/ou du métal.

6. Disposition de sac gonflable selon l'une des revendications précédentes, **caractérisée en ce que** le film (4) est étanche à l'eau, étanche à l'air et/ou étanche au gaz.

7. Disposition de sac gonflable selon l'une des revendications précédentes, **caractérisée en ce que** le film (4) est réalisé d'une pièce ou en plusieurs parties.

8. Disposition de sac gonflable selon l'une des revendications précédentes, **caractérisée en ce que** le film (4) est collé, soudé, serti, pressé, assemblé au poinçon et/ou gaufré.

9. Module de sac gonflable avec une disposition de sac gonflable (100) selon l'une des revendications précédents, un générateur de gaz (2) pour remplir le sac gonflable (1) de la disposition de sac gonflable (100) et un boîtier (3) pour recevoir la disposition de sac gonflable (100) avec le sac gonflable (1) plié.

10. Procédé pour la fabrication d'une disposition de sac gonflable (100) avec un sac gonflable (1) pour un module de sac gonflable avec un générateur de gaz (2) pour remplir le sac gonflable (1) et avec un boîtier (3) pour recevoir la disposition de sac gonflable (100) avec le sac gonflable (1) plié, dans lequel le sac gonflable (1) est plié au moyen d'une dépression dans sa forme définitive destinée à être reçue dans le boîtier (3), **caractérisé en ce que** le sac gonflable (1) est enveloppé avec un film (4) pendant ce temps.
